# EUROPEAN PATENT SPECIFICATION

(11) **EP 0 944 144 B1**
(45) Date of publication and mention of the grant of the patent: **30.11.2011**
(21) Application number: 99200580.1
(22) Date of filing: 02.03.1999
(51) Int. Cl.: H02B 1/056, H02B 1/20

(54) **An electrical connection element for connection between distribution bars and modular electrical devices**
Elektrisches Verbindungselement zum Anschluss zwichen Sammelschienen und modularen elektrischen Einrichtungen
Elément de connection électrique pour la connection entre des barres omnibus et des appareils électriques modulaires

(30) Priority: 17.03.1998 IT MI980544
(43) Date of publication of application: 22.09.1999
(73) Proprietor: BTICINO S.P.A., 20134 Milano (IT)
(72) Inventor: Re, Marcello, 21040 Venegono Superiore - Varese (IT); Passera, Costantino, 20094 Corsico - Milano (IT)
(74) Representative: Siniscalco, Fabio

(56) References cited:
- EP-A- 0 593 399
- EP-A- 0 788 205
- DE-A- 19 506 056
- US-A- 4 472 761

## Description

The present invention relates to electrical distribution boards and, more particularly, to an electrical connection element for connection between a distribution bar and an electrical device of the type which can be mounted by.being fitted on a rail and which has a socket or plug connector.

It is known that, in domestic, community and industrial low-power electrical installations, use is made of distribution and protection boards in which a plurality of modular electrical devices are engaged removably side by side on a support rail fixed to the framework of the board.

The modular electrical devices or, in short, modules, have a flat box-like structure with two parallel flat side faces, a front face with an operating or indicator member, and a rear face shaped so as to form a seat for engagement on the rail. Each module has releasable means for fixing to the rail and two electrical connection terminals. A first terminal or input terminal is formed as a socket or plug connector element accessible from the rear or from the top, and a second terminal or output terminal is formed as a clamp terminal accessible from the bottom.

The input terminals of the modules can be connected electrically to common supply conductors in various ways. It is known, for example, from Italian application MI96U000231 filed by the Applicant (EP 0798835) tc use connectors which are constituted by metal strips having teeth for engaging in the connectors of the modules. It is also known from French application FR2735290 to use metal connectors which engage, at one end, in the corresponding connectors of the modules at different heights and, at the other end, on parallel distribution bars disposed one above the other behind the modules.

Both of these known solutions have disadvantages, the former because, once a combination of metal strips has been arranged to satisfy the requirements for the interconnection of a particular combination of modules, it cannot be used for a different combination of modules so that even minimal modifications require the replacement of one or more interconnection strips, and the latter because it requires fairly laborious operations to align the connectors and because it presupposes the use of modules shaped suitably for homing the connectors.

EP 0788205 A2 relates to an assembly for use in wall mountable electrical consumer unit or loadcentre including mounting means for locating a plurality of longitudinally extending planar outgoer bus bars in superposed coplanar configuration.

EP 0593399 A1 relates to an adapter incorporating a safety grip device and useful for connecting rail-mounted apparatus to electric power supply busbars.

The object of the present invention is to propose an electrical connection element of the type described above which does not have the disadvantages of the prior art.

This object is achieved by the provision of a connection element as defined and characterized in the first claim.

The invention and the advantages resulting therefrom will be understood better from the following detailed description of some embodiments thereof, described by way of non-limiting example with reference to the appended drawings, in which:
Figure 1 shows, in perspective, a structure forming part of an electrical distribution board and using connection elements according to an embodiment of the invention,
Figure 2 is a section through the structure of Figure 1,
Figure 3 shows, in perspective, a structure of an electrical distribution board which uses connection elements according to a variant of the invention,
Figure 4 is a section through the structure of Figure 3,
Figures 5 to 8 show, in perspective and with parts separated, four different applications of connection elements according to the invention,
Figure 9 shows, in perspective, a group of connection elements according to a further embodiment of the invention, and
Figure 10 is a section through the structure of Figure 9.

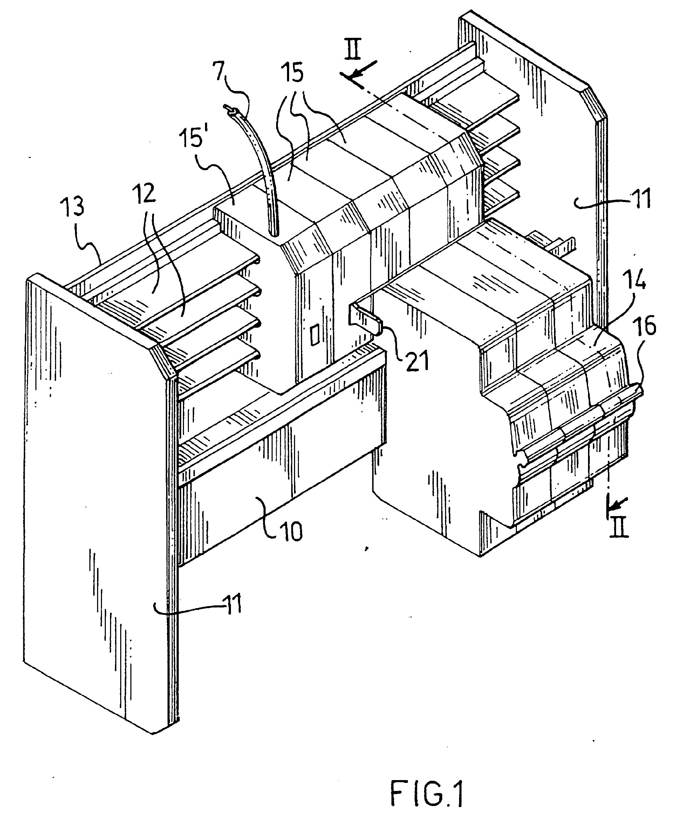

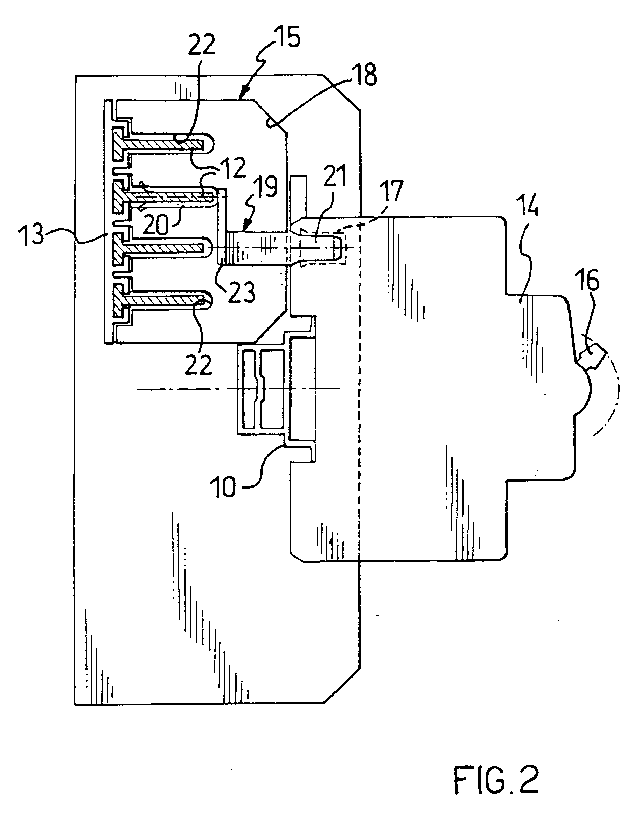

With reference to Figures 1 and 2, an electrical distribution board comprises a support rail 10 fixed horizontally between two vertical walls 11, and four parallel distribution bars 12 which are also horizontal. In this embodiment, the distribution bars have T-shaped cross-sections and are mounted in suitable seats of a structure 13 made of insulating material and also fixed between the vertical walls 11. Mounted on the rail 10 are three modular electrical devices or modules 14 which, in this example, are three single-pole switches, possibly arranged to operate simultaneously by having their respective operating levers fixed together so as to form a three-pole switch.

The switches are housed in flat box-like bodies shaped at the rear so as to form seats for the rail 10 and have means, not shown for releasable fixing to the rail. Each switch has an operating lever 16 on its front face and a socket-type connector element, in this embodiment in the form of a clip 17, as an input terminal on its rear face. On the bottom there is an output terminal, for example, a clamp terminal, not shown.

An electrical connection element 15 is associated with each module 14. A fourth connection element 15 is shown in position on the bars 12 without a module coupled to it in order to show its front face with a blade contact terminal 21.

Each connection element has a flat box-like body 18 which, in this embodiment, has substantially the same thickness as a module 14, and which comprises a conductor 19 having, at one end, a clip element 20 and, at the other end, a plug-in connection element which is complementary to the sockets of the modules and which, in this embodiment, is a blade contact 21 which projects from the front of the body. The body 18 has four parallel slots 22 which extend inwards from the rear wall and are spaced apart by a distance equal to the distance between the bars 12. In this embodiment, the conductor 19 is formed by a sheet-metal strip bent to form the contact terminal 21, by an arm 23 arranged at right angles, and by the resilient clip element 20 welded to the end of the arm 23 and aligned with one of the slots 22.

The connection elements 15 are held in position by the resilient clip elements. If necessary, however, other means for mechanical fixing to the bars may also be provided.

If the three modules 14 are coupled to one another so as to constitute a three-pole switch, each connection element 15 associated with a respective module contains a conductor 19 which has its clip 20 in a different slot 22, enabling each module to be connected to a different bar. The blade contact terminal projects in a predetermined position which is the same for all of the connection elements 15. In this embodiment, this position is offset from the horizontal median plane of the body 18 and four different connection elements are therefore required to form the four different connections between the input terminals of the modules and the four distribution bars.

According to a variant of the invention, not shown, the blade end is in a central position so that it suffices to provide only two versions of the connection elements, that is, those versions in which the clip ends 20 of the connectors 19 are disposed adjacent respective slots of the two slots on one side or on the other side of the horizontal median plane. The four possible connections are achieved simply with the use of connection elements oriented one way or the other.

Figure 1 also shows a fifth connection element, indicated 15', which is identical in shape and size to the connection elements 15 but without the blade contact 21. Instead, it has an electrical connection cable 7 with an insulating sheath, terminating inside the body in a clip element, not shown, identical to the clip elements 20 of the elements 15, for coupling to one of the bars 12, the other end of the cable 7 being connectible to a terminal of an electrical device, possibly mounted on the same rail 10, or to a conductor within or outside the distribution board. Naturally, a connection element 15' with more than one cable 7 may be provided for coupling to several bars 12.

According to a further variant of the invention, the conductor of the connection element has a third end shaped as a further plug or socket connection element complementary to those of the modular electrical devices to be connected to the bars.

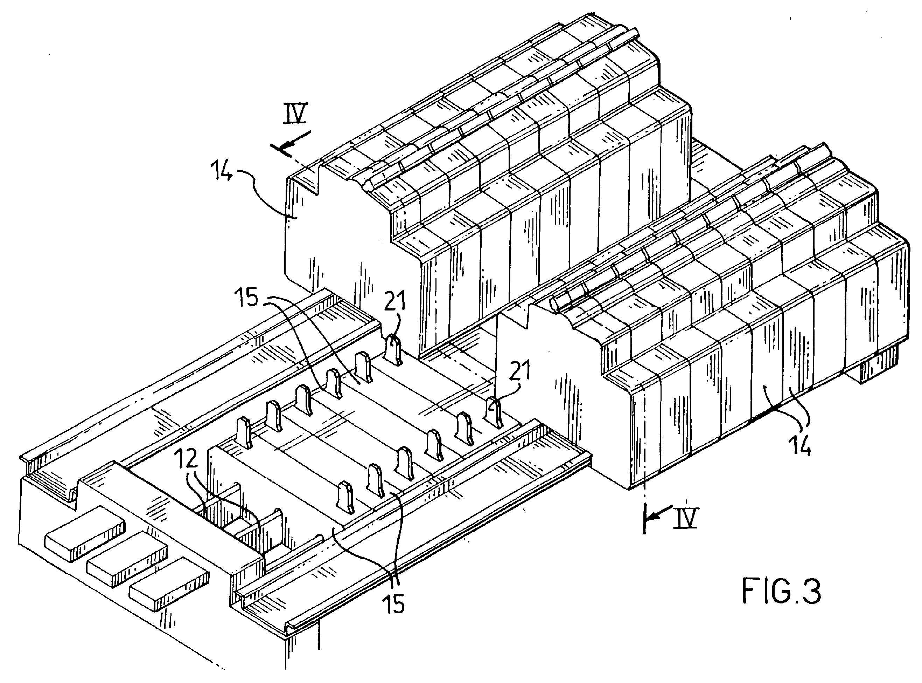

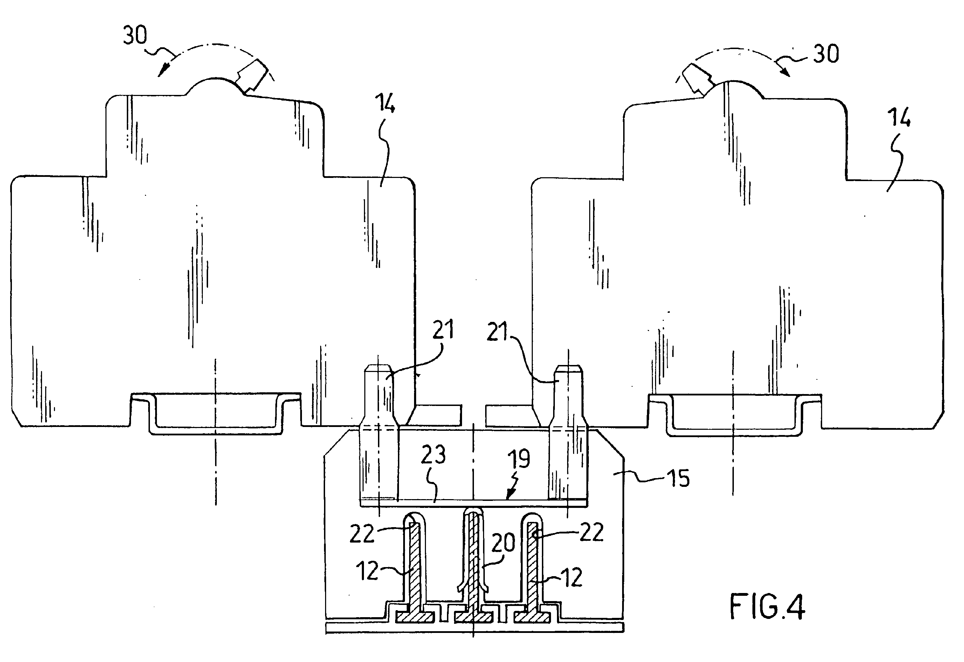

A variant of this type is shown in Figures 3 and 4, in which elements the same as those of Figures 1 and 2 are indicated by the same reference numerals. For simplicity of illustration, in this embodiment, only three distribution bars are shown. As can be seen, the conductor 19 in this embodiment is formed by a sheet-metal strip bent so as to form two blade contact terminals 21 joined together by an arm 23 arranged at right-angles and by a clip element 20 welded to the arm 23.

This double-contact connection element enables twice as many modular electrical devices to be connected to the same set of bars as a single-contact connection element. This variant is particularly advantageous for electrical distribution boards comprising two rows of switches which have to be operated in opposite directions, that is, more precisely, which have to be brought from the open position to the closed position by clockwise pivoting for one row and by anticlockwise pivoting for the other row, as indicated by the arrows 30 in Figure 4.

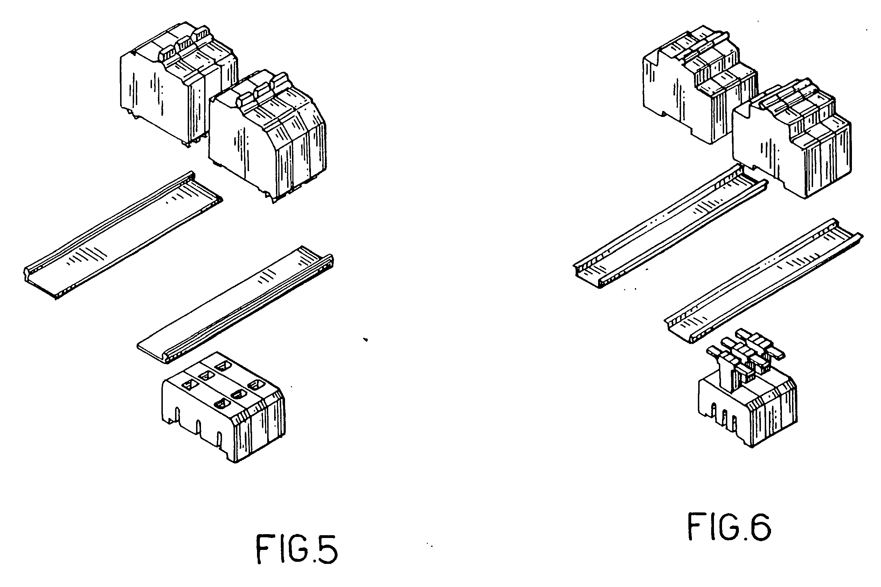

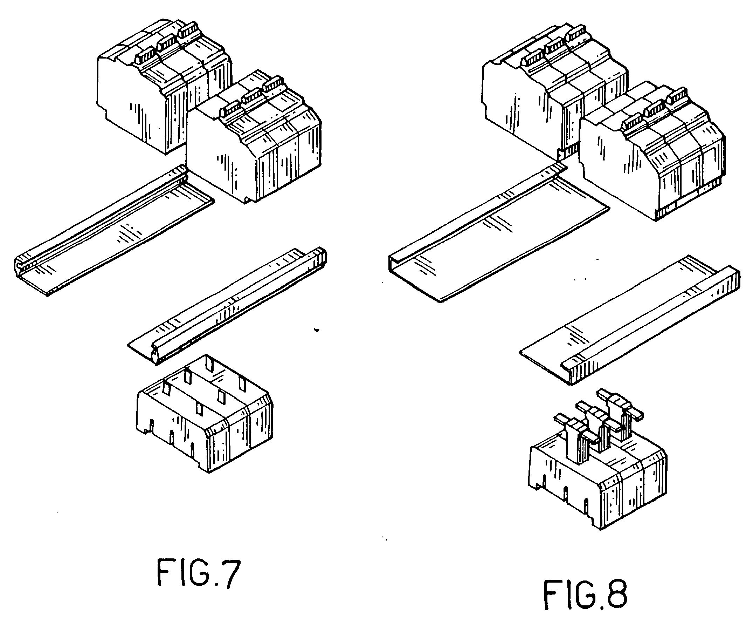

Four applications of the connection elements according to the invention having plug or socket connectors of types different from that shown in Figures 1 to 4 and/or different support rails are shown in Figures 5 to 8 to make clear that the invention can advantageously be used in combination with modular electrical devices of various different standard configurations.

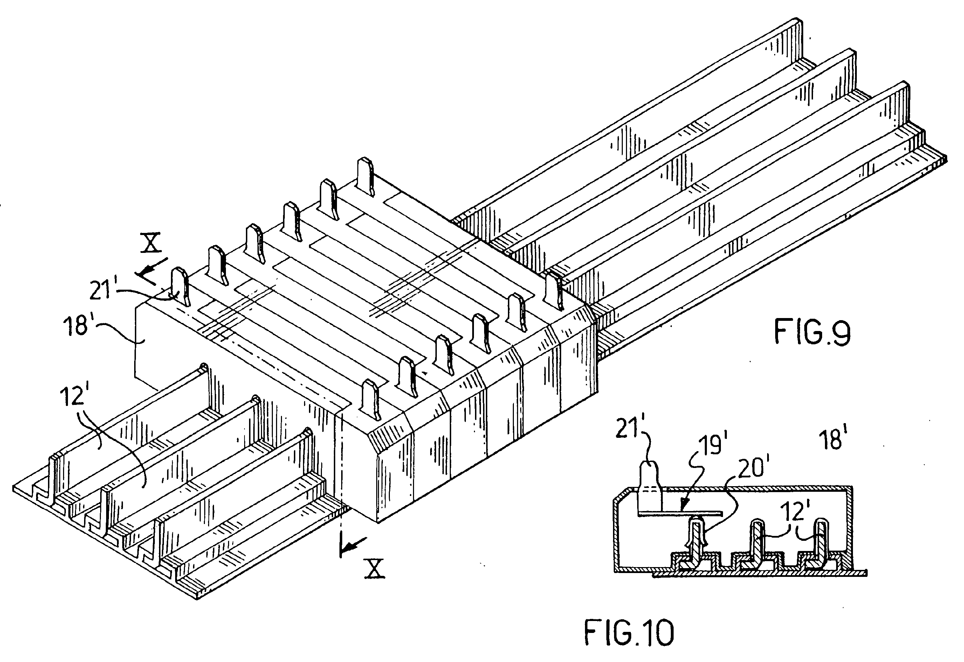

It will be noted that, in the applications according to Figures 3 to 8, two modules belonging to two different rows and aligned with one another longitudinally, are connected to the same bar 12 because they are associated with the same connection element. In order also to overcome this limitation, according to the embodiment of the invention shown in Figures 9 and 10, the box-like body, indicated 18', of the connection element, is formed by two portions of different thickness, one being half as thick as the other. The thicker portion contains the connector element complementary to that of the electrical device, in this embodiment, a blade contact terminal 21', and the thinner portion contains the clip end 20' of the conductor 19'. The dimensions of the two portions are such that, when two connection elements are placed side by side with their thinner portions in contact along an inner face, as shown in Figure 9, a pair of connection elements together having the same thickness as a single connection element of the type shown in Figure 3 and 4 is produced. The thickness of the thicker portion of a connection element, and hence the thickness of a pair, is advantageously equal to the thickness of a modular electrical device to be connected to the bars. Clearly, with the use of a pair of different connection elements, that is, two elements having respective conductors 19' which join the contact terminal 21' to a different bar, the aligned switches of two parallel rows can be connected to different bars.

In the application shown in Figures 9 and 10, distribution bars with L-shaped cross-sections, indicated 12', instead of T-shaped sections as in the other embodiments, have been used to indicate that the connection elements according to the invention can be used in combination with distribution bars of various types.

As can easily be appreciated from the foregoing description, the connection elements according to the invention permit extremely easy installation of the modules in the distribution board, allow any interconnection between modules and distribution bars without particular .constraints, permitting any modification of the electrical distribution board without problems, and can be used with all modular devices having corresponding socket or plug connectors, without laborious structural adaptations or modifications.

## Claims

1. An electrical connection element (15) for connection between a bar (12) of a set of parallel distribution bars and at least one electrical device (14) of the type which has a socket or plug connector element (17), is flat in shape, and can be mounted by being fitted beside other devices of the same type on a support rail (10) parallel to the longitudinal axes of the bars (12), the connection element (15) comprising a conductor (19) having, at a first end, a resilient clip-like coupling element (20) for establishing an electrical contact with the bar (12) and, at a second end, a plug or socket connector element (21) complementary to that (17) of the electrical device (14) for establishing an electrical contact with the device, the connection element (15) also comprising a box-like body (18) which is provided with slots (22) and encloses the conductor (19) leaving the aforementioned elements at its ends free for the respective electrical contacts, **characterised in that** the conductor (19) is formed by a sheet-metal strip bent to form the contact terminal (21), by an arm (23) arranged at right angles, and by the resilient clip-like coupling element (20) welded to the end of the arm (23) and aligned with one of the slots (22).

2. A connection element according to Claim 1, in which the box-like body (18) has a flat shape with a front face and a rear face, and has a plurality of parallel slots (22) extending from the rear face for the insertion of the set of bars (12), and in which the resilient clip-like coupling element (20) is disposed in one of the slots (22) and the complementary connector element (21) is disposed on the front face.

3. A connection element according to Claim 1 or Claim 2, in which the complementary connector element is a blade contact terminal (21) which projects from the box-like body (18).

4. A connection element according to Claim 2 or Claim 3, in which the thickness of the box-like body (18) is substantially equal to that of the electrical device (14).

5. A connection element according to any one of the preceding claims, in which the conductor (19) has, at a third end, a further plug or socket connector element (21) complementary to that of the electrical device (14), for the connection of a further electrical device.

6. A connection element according to Claim 5, to the extent that it is dependent on Claim 2, Claim 3 or Claim 4, in which the further connector element (21) which is on the third end of the conductor (19) is accessible from the front face.

7. A connection element according to Claim 6, in which each of the complementary connector elements (21) disposed on the second and third ends of the conductor (19) is disposed in the vicinity of an end of the front face.

8. A connection element according to Claim 7, in which the further complementary connector element which is disposed on the third end of the conductor is a further blade contact terminal (21) which projects from the box-like body (18). .

9. A connection element according to any one of Claims 1 to 3, in which the box-like body (18) has a first portion with a first thickness and a second portion with a thickness equal to half that of the first, and in which the resilient clip-like coupling element (20) of the conductor (19) is disposed in the second portion and the complementary connector element (21) is disposed in the first portion.

10. A connection element according to Claim 9, in which the first thickness is substantially equal to that of the electrical device.

## Patentansprüche

1. Elektrisches Verbindungselement (15) für eine Verbindung zwischen einer Leiste (12) einer Reihe von parallelen Verteilerleisten und wenigstens einer elektrischen Vorrichtung (14) von der Art, welche ein Sockel- oder ein Steckerverbinderelement (17) aufweist, welches eine flache Form aufweist und durch Einpassen neben anderen Vorrichtungen der gleichen Bauart an einer zu den Längsachsen der Leisten (12) parallelen Trägerschiene (10) montiert werden kann, wobei das Verbindungselement (15) einen Leiter (19) umfasst, welcher an einem ersten Ende ein elastisches klammerähnliches Kopplungselement (20) zum Herstellen eines elektrischen Kontakts zu der Leiste (12) und an einem zweiten Ende ein zu dem (17) der elektrischen Vorrichtung (14) komplementäres Stecker- oder Sockelverbinderelement (21) zum Herstellen eines elektrischen Kontakts zu der Vorrichtung aufweist, wobei das Verbindungselement (15) auch einen kastenähnlichen Körper (18) umfasst, welcher mit Schlitzen (22) versehen ist und den Leiter (19) umschließt, wobei er die oben erwähnten Elemente an seinen Enden für die entsprechenden elektrischen Kontakte frei lässt, **dadurch gekennzeichnet, dass** der Leiter (19) gebildet ist durch einen Blechstreifen, welcher gebogen ist, um die Kontaktklemme (21) zu bilden, durch einen in einem rechten Winkel angeordneten Arm (23) und durch das elastische klammerähnliche Kopplungselement (20), welches mit dem Ende des Arms (23) verschweißt ist und an einem der Schlitze (22) ausgerichtet ist.

2. Verbindungselement nach Anspruch 1, wobei der kastenähnliche Körper (18) eine flache Form mit einer Vorderseite und einer Rückseite aufweist und eine Mehrzahl von parallelen Schlitzen (22) aufweist, welche sich von der Rückseite zum Einfügen der Reihe von Leisten (12) erstrecken, und wobei das elastische klammerähnliche Kopplungselement (20) in einem der Schlitze (22) angeordnet ist und das komplementäre Verbinderelement (21) an der Vorderseite angeordnet ist.

3. Verbindungselement nach Anspruch 1 oder Anspruch 2, wobei das komplementäre Verbinderelement ein Flachkontaktstecker (21) ist, welcher von dem kastenähnlichen Körper (18) hervorsteht.

4. Verbindungselement nach Anspruch 2 oder Anspruch 3, wobei die Dicke des kastenähnlichen Körpers (18) im Wesentlichen gleich der der elektrischen Vorrichtung (14) ist.

5. Verbindungselement nach einem der vorhergehenden Ansprüche, wobei der Leiter (19) an einem dritten Ende ein weiteres, zu dem der elektrischen Vorrichtung (14) komplementäres Stecker- oder Sockelverbinderelement (21) für die Verbindung einer weiteren elektrischen Vorrichtung aufweist.

6. Verbindungselement nach Anspruch 5 unter Rückbeziehung auf Anspruch 2, Anspruch 3 oder Anspruch 4, wobei das weitere Verbinderelement (21), welches sich an dem dritten Ende des Leiters (19) befindet, von der Vorderseite zugänglich ist.

7. Verbindungselement nach Anspruch 6, wobei jedes von den komplementären, an dem zweiten und an dem dritten Ende des Leiters (19) angeordneten Verbinderelementen (21) in der Nähe eines Endes der Vorderseite angeordnet ist.

8. Verbindungselement nach Anspruch 7, wobei das weitere komplementäre Verbinderelement, welches an dem dritten Ende des Leiters angeordnet ist, ein weiterer Flachkontaktstecker (21) ist, welcher von dem kastenähnlichen Körper (18) hervorsteht.

9. Verbindungselement nach einem der Ansprüche 1 bis 3, wobei der kastenähnliche Körper (18) einen ersten Abschnitt mit einer ersten Dicke und einen zweiten Abschnitt mit einer halben Dicke der ersten Dicke aufweist und wobei das elastische klammerähnliche Kopplungselement (20) des Leiters (19) in dem zweiten Abschnitt angeordnet ist und das komplementäre Verbinderelement (21) in dem ersten Abschnitt angeordnet ist.

10. Verbindungselement nach Anspruch 9, wobei die erste Dicke im Wesentlichen gleich der der elektrischen Vorrichtung ist.

## Revendications

1. Elément de connexion électrique (15) pour la connexion entre une barre (12) d'un jeu de barres de distribution parallèles et au moins un dispositif électrique (14) du type qui comporte un élément de connecteur femelle ou mâle (17), qui est de forme plate, et qui peut être monté en étant disposé à côté d'autres dispositifs du même type sur un rail de support (10) parallèle aux axes longitudinaux des barres (12), l'élément de connexion (15) comprenant un conducteur (19) comportant, à une première extrémité, un élément d'accouplement du type attache élastique (20) pour établir un contact électrique avec la barre (12), et, à une deuxième extrémité, un élément de connecteur mâle ou femelle (21) complémentaire à celui (17) du dispositif électrique (14) pour établir un contact électrique avec le dispositif, l'élément de connexion (15) comprenant également un corps en forme de boîte (18) qui est muni de fentes (22) et qui renferme le conducteur (19), laissant les éléments précédemment mentionnés à ses extrémités libres pour les contacts électriques respectifs, **caractérisé en ce que** le conducteur (19) est constitué par une bande de métal en feuille pliée afin de former la borne de contact (21), par un bras (23) agencé à angle droit, et par l'élément d'accouplement du type attache élastique (20) soudé à l'extrémité du bras (23) et aligné avec l'une des fentes (22).

2. Elément de connexion selon la revendication 1, dans lequel le corps en forme de boîte (18) a une forme plate avec une face avant et une face arrière, et comporte une pluralité de fentes parallèles (22) s'étendant à partir de la face arrière pour l'insertion du jeu de barres (12), et dans lequel l'élément d'accouplement du type attache élastique (20) est disposé dans l'une des fentes (22) et l'élément de connecteur complémentaire (21) est disposé sur la face avant.

3. Elément de connexion selon la revendication 1 ou la revendication 2, dans lequel l'élément de connecteur complémentaire est une borne de contact à lame (21) qui fait saillie à partir du corps en forme de boîte (18).

4. Elément de connexion selon la revendication 2 ou la revendication 3, dans lequel l'épaisseur du corps en forme de boîte (18) est sensiblement égale à celle du dispositif électrique (14).

5. Elément de connexion selon l'une quelconque des revendications précédentes, dans lequel le conducteur (19) comporte, à une troisième extrémité, un autre élément de connecteur mâle ou femelle (21) complémentaire à celui du dispositif électrique (14), pour la connexion d'un autre dispositif électrique.

6. Elément de connexion selon la revendication 5, dans la mesure où elle dépend de la revendication 2, de la revendication 3 ou de la revendication 4, dans lequel l'autre élément de connecteur (21) qui se trouve sur la troisième extrémité du conducteur (19) est accessible à partir de la face avant.

7. Elément de connexion selon la revendication 6, dans lequel chacun des éléments de connecteur complémentaires (21) disposés sur les deuxième et troisième extrémités du conducteur (19) est disposé au voisinage d'une extrémité de la face avant.

8. Elément de connexion selon la revendication 7, dans lequel l'autre élément de connecteur complémentaire qui est disposé sur la troisième extrémité du conducteur est une autre borne de contact à lame (21) qui fait saillie à partir du corps en forme de boîte (18).

9. Elément de connexion selon l'une quelconque des revendications 1 à 3, dans lequel le corps en forme de boîte (18) comporte une première partie avec une première épaisseur et une deuxième partie avec une épaisseur égale à la moitié de celle de la première, et dans lequel l'élément d'accouplement du type attache élastique (20) du conducteur (19) est disposé dans la deuxième partie et l'élément de connecteur complémentaire (21) est disposé dans la première partie.

10. Elément de connexion selon la revendication 9, dans lequel la première épaisseur est sensiblement égale à celle du dispositif électrique.
